# FASCICULE DE BREVET EUROPEEN

(11) **EP 1 041 052 B1**
(45) Date de publication et mention de la délivrance du brevet: **13.10.2004**
(21) Numéro de dépôt: 00400833.0
(22) Date de dépôt: 27.03.2000
(51) Int. Cl.: C03C 25/18, C03C 25/12

(54) **Dispositif pour le gainage d'une fibre**
Vorrichtug zur Beschichtung von Fasern
Apparatus for the coating of a fiber

(30) Priorité: 01.04.1999 FR 9904075
(43) Date de publication de la demande: 04.10.2000
(73) Titulaire: ALCATEL, 75008 Paris (FR)
(72) Inventeur: Maurin, Laurent, 62218 Loisson-sous-lens (FR)
(74) Mandataire: Blokland, Arie

(56) Documents cités:
- EP-A- 0 803 482
- EP-A- 0 841 307
- US-A- 4 531 959
- US-A- 5 885 652

## Description

L'invention concerne un dispositif pour le gainage d'une fibre et plus particulièrement d'une fibre optique en verre à l'aide de résine.

Le dépôt d'une gaine concentrique de protection sur une fibre optique produite par fibrage à grande vitesse, c'est-à-dire au-delà de 10 mètres/seconde, implique l'usage d'un injecteur permettant une distribution homogène de la résine de revêtement destinée à constituer la gaine, pour limiter le plus possible les défauts susceptibles de dégrader la qualité de la fibre et en particulier les excentrements de revêtement.
Comme il est connu, le revêtement d'une fibre optique est effectué à la suite d'une opération de fibrage, réalisée à partir d'une préforme d'où est étirée la fibre. Cette fibre passe ensuite au travers de deux filières alignées verticalement et dans un injecteur de résine placé entre les filières. L'injecteur comporte une grille d'allure tubulaire dans l'axe de laquelle passe la fibre à gainer. La grille est intérieurement remplie de résine de revêtement qui se dépose en couche sur la fibre, lorsque cette dernière la traverse. Le remplissage en résine du volume intérieur que délimite la grille s'effectue, sous pression, depuis l'extérieur, au travers des trous ménagés dans la paroi cylindrique que cette grille comporte. La traversée à grande vitesse de la résine, présente à l'intérieur de la grille d'un injecteur, par une fibre, met en mouvement cette résine et se traduit par une forte recirculation intérieure de résine. Ceci est dû au fait qu'il y existe un champ de vitesses à très fort gradient dans la résine à l'intérieur de la grille, lorsque la vitesse de défilement de la fibre dans l'axe de la grille est grande, alors que la vitesse de déplacement de la résine est pratiquement nulle au niveau de la paroi cylindrique, avec les diamètres de tube de grille habituellement prévus.

L'expérience montre qu'avec les grilles usuellement exploitées, les excentrements du revêtement de fibre augmentent lorsque la vitesse de défilement de fibre augmente. Etant donné que le débit de résine de revêtement augmente avec la vitesse de la fibre, une hypothèse est donc que la vitesse et l'orientation d'entrée de la résine au travers de la grille de l'injecteur influent sur l'excentrement, celui-ci tendant à se développer, lorsque cette vitesse d'entrée est augmentée.

Il existe alors des pertes de charge importantes lors de l'entrée de la résine dans le tube de grille, au travers de la paroi cylindrique de ce tube. Il est donc intéressant de réduire le plus possible ces pertes de charge. Il existe aussi des hétérogénéités de distributions de vitesses d'entrée de résine au travers de la grille qui conduisent à des phénomènes se traduisant par l'apparition d'excentrements. De plus, des taux importants de cisaillement peuvent exister au bas du volume de résine que contient la grille et plus précisément à l'attaque de la filière finisseuse au travers de laquelle sort la fibre gainée.

Il est également judicieux d'équilibrer l'écoulement de résine pour éviter les défauts de revêtements de type manque ou de type olive. Or il est connu que ce bon équilibre se traduit par l'existence d'une surface d'équilibre, du genre ménisque, maintenue par les tensions de surface, là où la fibre pénètre dans la résine que contient la grille. Il est donc important que le dispositif de gainage et en particulier l'injecteur soient agencés de manière à favoriser le maintien à l'équilibre du ménisque, en cours de gainage.

L'invention propose donc un dispositif de gainage de fibre comportant un injecteur doté d'une grille tubulaire, montée entre deux filières entre lesquelles la fibre circule verticalement dans l'axe de la grille, qui comporte une paroi d'allure cylindrique et qui est remplie de résine de gainage lui parvenant par des trous répartis dans sa paroi.

Selon une caractéristique de l'invention, ce dispositif comporte une grille d'injecteur dont la paroi cylindrique de diamètre extérieur dₑₓₜ est située à une distance minimale de la paroi de diamètre Dₑₓₜ qui l'entoure dans l'injecteur, cette distance étant telle que le rapport Dₑₓₜ/dₑₓₜ soit au moins égal à 1,35 et que la différence Dₑₓₜ-dₑₓₜ soit plus grande ou au moins égale à 4 millimètres. Les trous régulièrement répartis dans ladite paroi ont un diamètre minimal au moins égal à 0, 50 mm et une densité supérieure à 0,20 trou par mm². La hauteur de la grille y est comprise entre 5 et 50 mm et la différence entre les diamètres extérieur et intérieur de paroi de grille dₑₓₜ-dᵢₙₜ est inférieure ou au plus égale à 10 mm, avec un diamètre intérieur minimal dᵢₙₜ de 5 mm.

L'invention, ses caractéristiques et ses avantages sont précisés dans la description qui suit en liaison avec les figures évoquées ci-dessous.

La figure 1 présente un schéma simplifié en coupe d'un dispositif de gainage de fibre.

Les figures 2 et 3 présentent respectivement une coupe médiane vue de face et vue de dessus d'un injecteur, selon l'invention.

La figure 4 présente une coupe médiane vue de face d'une variante de réalisation d'injecteur.

La figure 5 présente un diagramme représentatif des sommes cumulées des excentrements obtenus au cours du temps en alternant un injecteur classique et un injecteur selon l'invention.

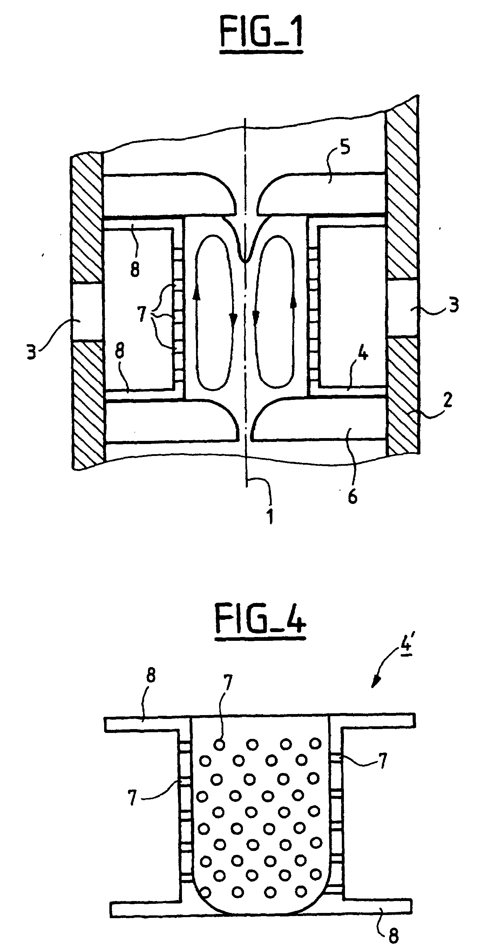

Le dispositif de gainage de fibre, schématisé sur la figure 1, est destiné à assurer le gainage d'une fibre 1, notamment d'une fibre optique obtenue par fibrage à partir d'une préforme non représentée. Ce gainage est supposé réalisé à l'aide d'une résine exploitée pour réaliser une gaine protectrice continue et uniforme sur la longueur de la fibre 1, ou éventuellement sur une autre gaine préalablement déposée sur cette fibre. La résine utilisée est envoyée sous une pression déterminée dans un injecteur 2 par des orifices 3 ménagés dans la paroi de cet injecteur pour remplir une cavité où est logée une grille 4 d'allure tubulaire. La grille 4 est montée entre une filière de guidage 5 et une filière de finition 6 entre lesquelles circule la fibre 1 issue de la préforme. Cette fibre traverse axialement la grille 4 où elle se recouvre de résine pour ressortir gainée au travers d'un orifice calibré de délimitation de gaine que comporte la filière de finition 6. La résine de gainage pénètre à l'intérieur de la grille par des trous 7, répartis dans la paroi cylindrique de cette grille qu'ils traversent, comme on le voit sur les figures 1 à 4. Comme il est connu, cette grille a pour objet de répartir la résine autour de la fibre d'une manière homogène.

A cet effet, il est prévu que la paroi cylindrique de la grille 4, dont le diamètre extérieur est dₑₓₜ, soit logée dans la cavité de l'injecteur 2 qui la reçoit de manière qu'elle soit située à une distance minimale de la paroi de diamètre Dₑₓₜ qui l'entoure dans l'injecteur. Dans les exemples de réalisation de grille présentés sur les figures 1 à 4, la paroi cylindrique de grille est extérieurement bordée à chacune de ses extrémités par un anneau 8 dont le diamètre extérieur est choisi égal à Dₑₓₜ de manière à délimiter le volume minimal prévu autour du tube de grille pour la circulation de la résine. Il est bien entendu envisageable de ne prévoir un anneau 8 qu'à une seule des deux extrémités d'une grille.

Selon l'invention, le rapport Dₑₓₜ/dₑₓₜ est choisi au moins égal à 1,35 et la différence Dₑₓₜ - dₑₓₜ est choisie plus grande ou au moins égale à 4 millimètres, afin de permettre une homogénéisation des écoulements de résine tout autour du tube de grille avant l'entrée de cette résine à l'intérieur du tube par les trous 7 et une élimination des excentrements de gaine de fibre apparaissant, lorsqu'il existe des hétérogénéités de distribution de vitesse en ce qui concerne l'alimentation en résine autour du tube.

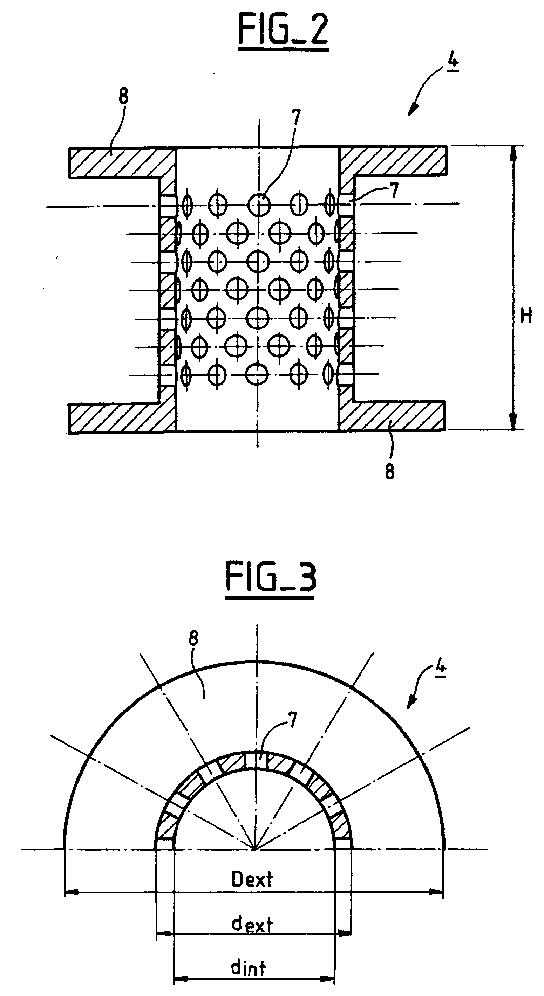

Il est aussi prévu une répartition régulière des trous dans la paroi cylindrique de la grille, comme le montrent les figures 2 et 3 où les trous sont décalés horizontalement de π/6 l'un par rapport à l'autre, avec un décalage vertical de π/12 d'une rangée à l'autre. La densité de ces trous est choisie la plus importante possible, pour permettre le défilement de la fibre à vitesse élevée dans l'injecteur, avec un minimum d'excentrement, en conservant une vitesse modérée de pénétration de la résine dans le tube de grille. Le diamètre minimal des trous 7 ménagés dans la paroi tubulaire de la grille est prévu au moins égal à 0, 50 mm et la densité minimale de trous en paroi est prévue au moins égale à 0,20 trous/mm².

La hauteur H du tube de grille est prévue comprise entre 5 mm et 50 mm notamment pour permettre d'éloigner suffisamment de la filière de finition 6 le ménisque qui apparaît à la surface supérieure de la résine dans le tube de grille en cours de gainage. Ceci a notamment pour objet d'éviter que ce ménisque ne s'engouffre temporairement dans la filière en occasionnant des défauts de revêtement. La limitation de la hauteur H permet notamment d'éviter que les noeuds potentiels de vibrations, que constituent les filières 5 et 6, soient éloignés d'une distance autorisant un écartement de la fibre, par rapport à son axe, qui puisse être suffisamment grand pour occasionner une excentration inadmissible de revêtement, si la fibre est sollicitée en déplacement transversal entre les filières.

L'épaisseur de la paroi du tube de grille est réduite pour réduire les pertes de charge à l'occasion de la pénétration de la résine par les trous 7 dans le tube de grille depuis l'extérieur de ce tube et pour faciliter les échanges thermiques à l'intérieur de la résine, que celle-ci soit dans ou autour du tube de grille.

La différence entre le diamètre extérieur dₑₓₜ et le diamètre intérieur dᵢₙₜ est prévue inférieure ou au plus égale à 10 mm avec un diamètre intérieur minimal dᵢₙₜ de 5 mm. Ce diamètre minimal permet notamment de limiter à une valeur acceptable, les pertes de charge lors de la pénétration de la résine dans le tube de grille. Il permet au ménisque de se développer naturellement sans être perturbé. Il permet encore de limiter le taux de cisaillement de la résine en entrée de filière de finition 6 au bas du tube de grille.

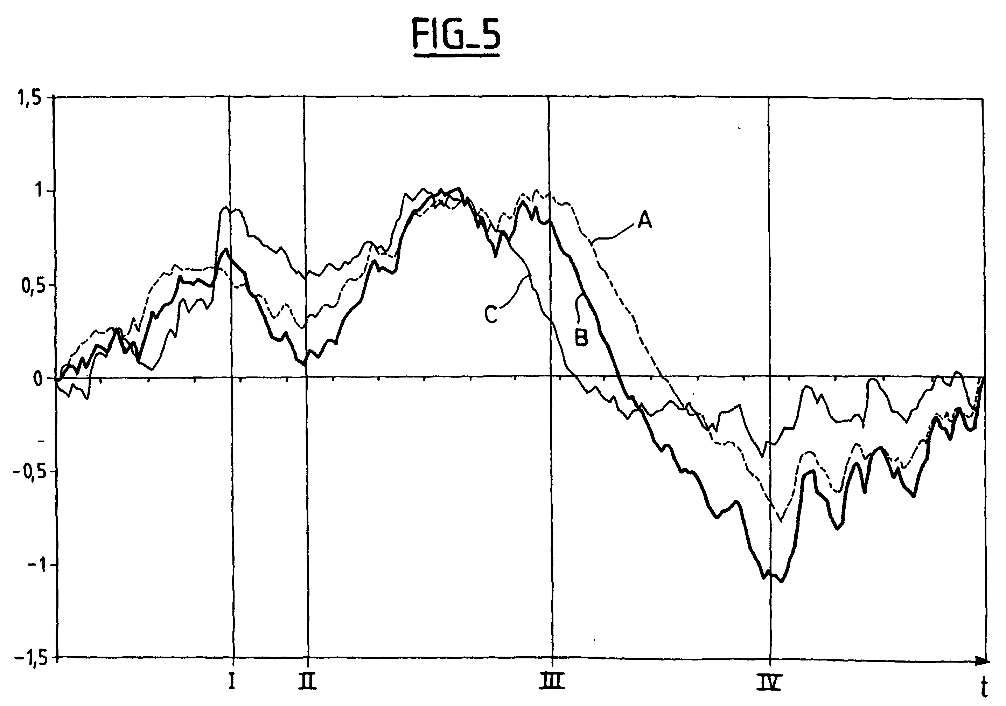

Selon une variante de réalisation illustrée sur la figure 4, la grille 4' est réalisée de manière que la paroi cylindrique du tube de grille se referme intérieurement en courbe, autour de l'ouverture centrale qu'elle comporte à son extrémité inférieure. Cette courbure est déterminée de manière connue en soi pour réduire le taux de cisaillement de la résine entourant la fibre en sortie d'injecteur, à l'attaque de la filière inférieure de finition 6.

Le diagramme présenté sur la figure 5 a été établi à partir de relevés d'excentrement effectués en cours de production d'une suite de bobines de fibre avec un dispositif de gainage où ont été alternativement montés un injecteur usuel, selon l'art antérieur, pendant une première période terminée en I, une période située entre II et III et une dernière période commençant en IV, et un injecteur, selon l'invention, pendant les périodes situées l'une entre I et II, l'autre entre III et IV. La fibre prise en compte à titre d'exemple est une fibre optique dont l'âme est recouverte de deux gaines superposées.

Chacune des trois courbes A, B, C représente la somme cumulée des excentrements respectivement mesurés au cours du temps en ce qui concerne respectivement l'excentrement de la gaine primaire de revêtement par rapport à la fibre, pour la courbe A, l'excentrement de la gaine secondaire par rapport à la fibre, pour la courbe B, et l'excentrement de la gaine secondaire par rapport à la gaine primaire, en ce qui concerne la courbe C.

Le diagramme montre clairement qu'en dehors des variations d'excentrement en valeur cumulée pour les différentes bobines de fibre produites avec un même injecteur au cours de chaque période, il a été obtenu une nette amélioration par réduction des excentrements avec l'injecteur, selon l'invention, par rapport à l'injecteur, selon l'art antérieur. Les améliorations que constituent les réductions des excentrements considérés en valeurs cumulées sont ici illustrées par les pentes négatives des courbes représentées au cours des périodes où un injecteur selon l'invention a été utilisé. Elles se retrouvent de manière globalement correspondante sur les trois courbes et elles traduisent une réduction des défauts au niveau des fibres gainées. Cette réduction permet d'envisager une augmentation de la vitesse de fibrage et de défilement de la fibre dans le dispositif de gainage.

## Revendications

1. Dispositif de gainage de fibre comportant un injecteur doté d'une grille tubulaire (4) montée entre deux filières 5(, 6) entre lesquelles la fibre circule verticalement dans l'axe de la grille qui est remplie de résine de gainage lui parvenant par des trous répartis dans sa paroi cylindrique, **caractérisé en ce qu'**il comporte une grille d'injecteur à paroi cylindrique de diamètre extérieur dₑₓₜ située à une distance Dₑₓₜ de la paroi de diamètre Dₑₓₜ, qui l'entoure dans l'injecteur, telle que le rapport Dₑₓₜ/dₑₓₜ soit au moins égal à 1,35 et que la différence Dₑₓₜ - dₑₓₜ soit au moins égale à 4 millimètres, et dont les trous (7) régulièrement répartis dans ladite paroi ont un diamètre au moins égal à 0,50 mm et une densité au moins égale à 0,20 trou par mm², la hauteur de la grille étant comprise entre 5 et 50 mm et la différence entre les diamètres extérieur et intérieur de paroi cylindrique de grille dₑₓₜ-dᵢₙₜ est au plus égale à 10 mm avec un diamètre intérieur minimal dᵢₙₜ de 5 mm.

2. Dispositif de gainage, selon la revendication 1, dans lequel la grille a une paroi cylindrique extérieurement bordée par un anneau (8) de délimitation de volume a au moins une de ses deux extrémités, chaque anneau ayant un diamètre extérieur Dₑₓₜ, tel que le rapport Dₑₓₜ/dₑₓₜ soit au moins égal à 1,35 et que la différence Dₑₓₜ-dₑₓₜ soit au moins égale à 4 millimètres

3. Dispositif de gainage, selon l'une des revendications 1 ou 2, dans lequel la grille (4') comporte une paroi cylindrique se refermant intérieurement en courbe autour de l'ouverture centrale inférieure où sort la fibre pour pénétrer dans la filière inférieure de finition (6).

## Patentansprüche

1. Vorrichtung zur Beschichtung von Fasern, die ein mit einem röhrenförmigen Gitter (4) versehenes Einspritzventil umfasst, das zwischen zwei Ringen (5, 6) angeordnet ist, zwischen denen die Faser vertikal in der Gitterachse umläuft, das mit Beschichtungsharz gefüllt ist, das es durch in seiner zylindrischen Wand verteilte Löcher erreicht, **dadurch gekennzeichnet, dass** sie ein Einspritzgitter mit zylindrischer Wand mit einem Außendurchmesser dext umfasst, das in einem Abstand Dext von der Wand mit dem Durchmesser Dext angeordnet ist, die das Einspritzventil umgibt, sodass das Verhältnis Dext/dext wenigstens gleich 1,35 und die Differenz Dext - dext wenigstens 4 mm beträgt, und dessen regelmäßig in dieser Wand verteilten Löcher (7) einen Durchmesser von wenigstens gleich 0,50 mm und eine Dichte von wenigstens gleich 0,20 Löcher pro mm² aufweisen, wobei die Gitterhöhe zwischen 5 und 50 mm liegt und die Differenz zwischen den Außen- und Innendurchmessern der zylindrischen Wand des Gitters dextdint wenigstens gleich 10 mm mit einem kleinsten Innendurchmesser dint von 5 mm beträgt.

2. Vorrichtung zur Beschichtung nach Anspruch 1, bei der das Gitter eine zylindrische Außenwand aufweist, die von einem Volumenbegrenzungsring (8) an wenigstens einem ihrer beiden Enden begrenzt wird, wobei jeder Ring einen Außendurchmesser Dext aufweist, so dass das Verhältnis Dext/dext wenigstens gleich 1,35 und die Differenz Dext-dext wenigstens gleich 4 Millimeter beträgt.

3. Vorrichtung zur Beschichtung nach einem der Ansprüche 1 oder 2, bei der das Gitter (4') eine zylindrische Wand umfasst, die sich innen gekrümmt um die kleinere zentrale Öffnung schließt, wo die Faser austritt, um in den kleineren Endfertigungsring (6) einzutreten.

## Claims

1. Fibre-coating apparatus comprising an injector provided with a tubular grid (4) mounted between two dies (5, 6) between which the fibre travels vertically in the axis of the grid, which is filled with coating resin entering the grid by way of holes distributed in its cylindrical wall, **characterised in that** it comprises an injection grid having a cylindrical wall of external diameter dₑₓₜ located at a distance Dₑₓₜ from the wall of diameter Dₑₓₜ which surrounds it in the injector such that the ratio Dₑₓₜ/dₑₓₜ is at least 1.35 and the difference Dₑₓₜ - dₑₓₜ is at least 4 millimetres and wherein the holes (7) regularly distributed in the said wall have a diameter of at least 0.50 mm and a density of at least 0.20 holes per mm², the height of the grid being from 5 to 50 mm, and the difference between the external and internal diameters of the cylindrical wall of the grid dₑₓₜ - dᵢₙₜ is at most 10 mm with a minimum internal diameter dᵢₙₜ of 5 mm.

2. Coating apparatus according to claim 1, wherein the grid has a cylindrical wall bounded on the outside by a volume-delimiting collar (8) at at least one of its two ends, each collar having an external diameter Dₑₓₜ such that the ratio Dₑₓₜ/dₑₓₜ is at least 1.35 and the different Dₑₓₜ - dₑₓₜ is at least 4 millimetres.

3. Coating apparatus according to one of claims 1 and 2, wherein the grid (4') comprises a cylindrical wall curving inwards and closing around the bottom central opening through which the fibre exits for entry into the bottom finishing die (6).
